# EUROPÄISCHE PATENTSCHRIFT

(11) **EP 1 656 243 B1**
(45) Veröffentlichungstag und Bekanntmachung des Hinweises auf die Patenterteilung: **21.05.2008**
(21) Anmeldenummer: 04763644.4
(22) Anmeldetag: 30.07.2004
(51) Int. Cl.: B29C 43/10, B29C 35/04, B29C 43/52, B29C 43/56, F26B 5/04

(54) **FORMUNG THERMOPLASTISCH GEBUNDENER LUFTDURCHLÄSSIGER BAUTEILE**
SHAPING THERMOPLASTICALLY BOUND AIR-PERMEABLE PARTS
FACONNAGE D'ELEMENTS STRUCTURELS PERMEABLES A L'AIR LIES PAR VOIE THERMOPLASTIQUE

(30) Priorität: 05.08.2003 DE 10335721
(43) Veröffentlichungstag der Anmeldung: 17.05.2006
(73) Patentinhaber: Entwicklungsgesellschaft für Akustik (EfA) mit beschränkter Haftung, 58454 Witten (DE)
(72) Erfinder: PIATKOWSKI, Reimund, 44143 Dortmund (DE); NICOLAI, Norbert, 46514 Schermbeck (DE); REISINGER, Herbert, 42285 Wuppertal (DE); PETERKORD, Willi, 44892 Bochum (DE)
(74) Vertreter: Jönsson, Hans-Peter
(86) Internationale Anmeldenummer: PCT/EP2004/008559
(87) Internationale Veröffentlichungsnummer: WO 2005/016619

(56) Entgegenhaltungen:
- EP-A- 0 389 017
- EP-A- 0 484 778
- WO-A-92/08601
- DE-A- 1 604 730
- DE-A- 19 822 355

## Beschreibung

Die Erfindung betrifft die Formgebung von Mischungen thermoplastischer Bindemitteln mit Fasern, Schaum, Granulat etc..

Bauteile aus faserförmigen Hauptbestandteilen werden mittels Dampf erwärmt, um die Zykluszeiten zu minimieren. So wird bei Bauteilen, in denen Phenolharz als Bindemittel eingesetzt wird, das Bauteil in einem Heißpresswerkzeug ausgeformt und mittels Dampf die für die chemische Reaktion erforderliche Wärme in die Struktur Bauteils gefördert.

Bei Bauteilen mit thermoplastischen Bindemitteln wird in der Regel ein Vlies erstellt, das auf einer Platte durch Kontakt oder zur Umgebung hin offen von Dampf durchströmt und dabei erwärmt wird.

Im Anschluss daran wird das erwärmte Material in einer Presse in Form gebracht und im kalten Werkzeug abgekühlt. Dieses Verfahren wird diskontinuierlich zur Verformung von plattenförmigen Zuschnitten oder auch in einem kontinuierlichen Prozess zur Herstellung von Platten eingesetzt, DE 698 01 228 T2.

Bei einem anderen Verfahren wird das in Form gebrachte Material von heißer Luft durchströmt, erwärmt und anschließend mit durchströmender kalter Luft abgekühlt, DE 3625818 C2.

Das Prinzip der Wärmeabfuhr mittels Verdampfung von Flüssigkeiten wird umfassend in der Kältetechnik angewandt. Dabei wird heute zwar seltener als zu Beginn der Nutzung dieser Technologie auch Wasser als Arbeitsmedium eingesetzt. Die Verdampfung des Wassers erfolgt dann meist im Vakuum, um die Wärme auf einem niedrigen Temperaturniveau übertragen zu können.

In industriellen Prozessen wird Vakuum verbreitet zur Trocknung von Materialien, z.B. Holz eingesetzt, DE 198 22 355 A1. Dabei wird das Material in eine druckfeste Kammer verbracht. In der Kammer wird ein Vakuum angelegt und die Feuchtigkeit im Material verdampft. Die für die Verdampfung erforderliche Wärme wird kontinuierlich von außen zugeführt.

Die DE 199 07 279 A1 beschreibt einen Formteilautomat zur Herstellung von Kunststoffschaumprodukten aus Beads, mit einem Formhohlraum, in den die Beads eingetragen und mit einem gasförmigen Wärmeträger, insbesondere Heißdampf, beaufschlagt werden, wobei der gasförmige Wärmeträger aus einer Formteilautomatenfläche in den Formhohlraum eintritt und durch eine andere Formteilautomatenfläche wieder austritt, dadurch gekennzeichnet, dass am Eintritt und/oder am Austritt ein Gewebe besteht.

Die WO 97/04937 beschreibt ein Verfahren um eine Textilabdeckung mit einem kissenförmigen Körper zu verbinden um ein Sitzkissen für eine Sitzvorrichtung zu erhalten, indem man Dampf unter Druck einem Formwerkzeug zuführt, das Formwerkzeug den Dampf diffundiert und aus dem Werkzeug hinausführt durch die Textilabdeckung in den kissenförmigen Körper, wobei das Formwerkzeug, die Textilabdeckung und der kissenförmige Körper in einer Druckkammer angeordnet sind, die bei relativ hohem Druck gehalten wird, damit der Verbindungsprozess in einer Hochdruckumgebung durchgeführt werden kann.

Bei der Herstellung von Formkörpern aus Polystyrol wird ein Hohlraum mit vorexpandierten Polystyrolperlen gefüllt. Anschließend erwärmt Wasserdampf die Perlen. Die zugeführte Wärme lässt in den Perlen befindliches Treibmittel verdampfen, wodurch die Perle weiter expandiert. Daraus resultiert ein Druck, mit dem die Perlen gegeneinander und gegen die Wandung pressen, wodurch sie miteinander verschweißen. Um am Ende des Prozesses den Druck abzubauen wird Wasser aufgesprüht und auch in einigen Fällen Vakuum angelegt.

Die Aufgabe der vorliegenden Erfindung besteht darin, ein luft- und dampfdurchlässiges Bauteil 4 aus faserförmigen Hauptbestandteilen mit thermoplastischen Bindemitteln und mit geringer Dichte sowie Materialstärken von 5 bis 150 mm in kurzer Zeit zu erwärmen und wieder abzukühlen, ohne die stoffliche Zusammensetzung des Bauteils wesentlich zu verändern.

Die vorgenannte Aufgabe wird in einer ersten Aufführungsform gelöst durch ein Verfahren zum Herstellen und/oder Fixieren von luft- und dampfdurchlässigen Bauteilen 4 enthaltend ein Gemisch aus thermoplastischem Bindemittel und natürlichen Fasern und/oder künstlichen Fasern mit oder ohne zusätzlichem Schaumstoff, letzteres in Form von Flocken und/oder Granulat, dadurch gekennzeichnet, dass man das Bauteil 4 in einer druckfesten Kammer zwischen formgebenden Oberflächen mit geringer oder keiner Wärmeübertragung an das oder aus dem Werkzeug nach Entlüften der Kammer durch Anlegen eines Vakuums im Bereich von 0,5 bis 0,01 bar absolut mit einem dampfförmigen Wärmeträger in einem Druckbereich von 2 bis 10 bar absolut beaufschlagt und in einem weiteren Verfahrensschritt mit Vakuum im Bereich von 0,5 bis 0,1 bar absolut zur Verdampfung des kondensierten Wärmeträgers beaufschlagt.

Im Gegensatz zum Stand der Technik wird bei der hier beschriebenen Erfindung ein Wärmeträger im dampfförmigen Aggregatzustand, insbesondere Wasserdampf zum Formen von Fasern und Schaumstoffen mit aufschmelzenden Bindemitteln genutzt, wobei der wesentliche Vorteil darin liegt, dass die Wärmeübertragung zur Erwärmung über die Kondensation des Dampfes erfolgt und das Kondensat im wesentlichen an der Stelle verbleibt an der es im nächsten Verfahrensschritt zur Abkühlung mittels Verdampfen genutzt wird.

Dabei ist es erforderlich, das verwendete Werkzeug auf das Material und den Prozess abzustimmen. Ein kaltes Werkzeug führt zu starker Kondensation mit Wärmeübertragung am Werkzeug während der Bedampfungsphase. Das überschüssig vorhandene Kondensat wird vom Bauteil aufgenommen und kann nicht in ausreichend kurzer Zeit durch Evakuieren aus dem Material entfernt werden.

Bei zu heißem Werkzeug haftet das im Inneren durch die Verdampfungskühlung kalte Werkstück an der heißen Werkzeugoberfläche.

Erfindungsgemäß wird daher das Bauteil mit einem Werkzeug geringer Wärmeleitfähigkeit und/oder geringer Wärmekapazität in Kontakt gebracht, wodurch die Wärmeübertragung an das Werkzeug und/oder vom Werkzeug während des Zyklusses begrenzt wird auf maximal 250 m²/s² je m² Bauteiloberfläche und K Bauteilerwärmung während des Prozesses.

Eine weitere bevorzugte Ausführungsform der vorliegenden Erfindung besteht darin, dass man ein Bauteil 4 aus wenigstens einer, insbesondere zwei oder mehr Schichten gleicher oder unterschiedlicher Materialzusammensetzung einsetzt.

Weiterhin bevorzugt im Sinne der vorliegenden Erfindung ist es, als Werkzeug zur Formgebung eine konturgebende dünne Schale eines gelochten und/oder ungelochten Blechs mit geringer Wärmekapazität und einen dampfdichten raumfüllenden Werkzeuggrundkörper mit einem dazwischenliegenden Dampfleitraum einzusetzen.

Besonders bevorzugt im Sinne der vorliegenden Erfindung befindet sich das Blech in einem Abstand von 2 bis 20 mm zum Werkzeuggrundkörper. Alternativ dazu ist es möglich, als formgebende Kontur eine auf den Werkzeuggrundkörper aufgesetzte Schicht aus einem Material geringer Wärmeleitfähigkeit, insbesondere aus PTFE, EPDM, Epoxidharz oder Phenolharz in einer Schichtstärke von 1 bis 30 mm einzusetzen.

Durch die in dieser Erfindung beschriebene Werkzeuggestaltung wird erreicht, dass die formgebende Oberfläche wenig Wärme aufnimmt und somit wenig zusätzliches Kondensat im Werkstück anfällt. Gleichzeitig kühlt die Oberfläche bei der Verdampfungskühlung nachhaltig ab, wodurch die Entformbarkeit des Werkstückes erleichtert wird.

Besonders bevorzugt im Sinne der vorliegenden Erfindung ist es, einen druckfesten Werkzeuggrundkörper aus bearbeitetem Vollmaterial, insbesondere aus Aluminium oder Stahl alternativ dazu auch aus bearbeitetem Gussmaterial, insbesondere aus Grauguss oder Aluminiumguss einzusetzen.

Allen Varianten der angepassten Werkzeuge dieser Erfindung gemeinsam ist der beheizte Grundkörper durch den die Kondensation am Grundkörper gering gehalten wird.

Die Wahl des flüssigen Wärmeträgers richtet sich nach den gewünschten Gegebenheiten. Besonders bevorzugt im Sinne der vorliegenden Erfindung ist es, als Wärmeträger Thermoöl oder Heizwasser in durchströmten Bohrungen oder Rohrschlagen zur Temperierung auf eine Temperatur von 120 bis 180 °C.

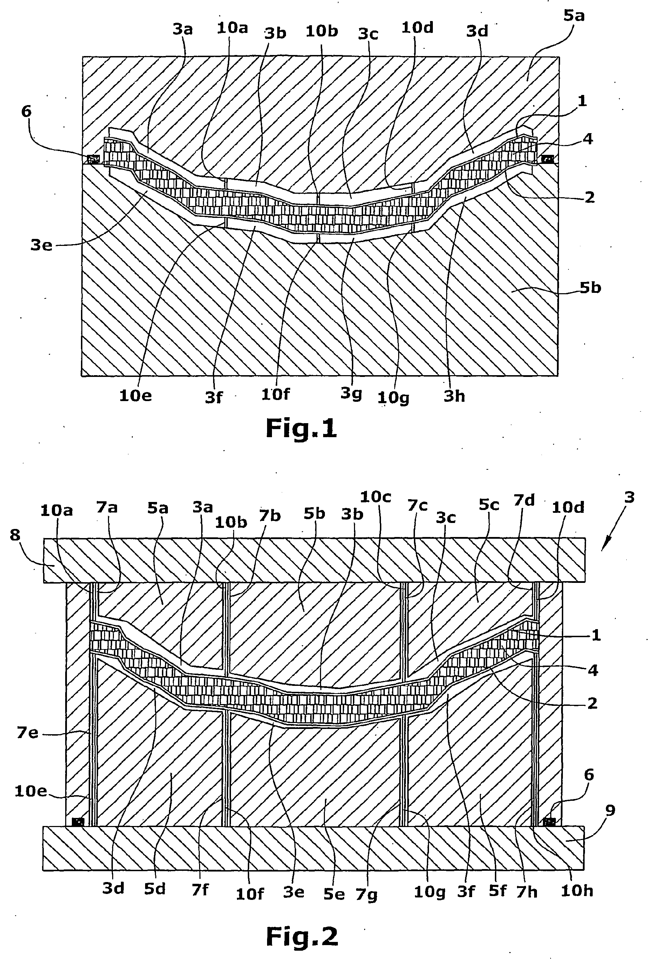

Bei der Variante A, siehe Fig. 1, besteht das formgebende Werkzeug aus zwei dünnen, gelochten Blechen 1,2, die auf einem Blech-Rahmen befestigt sind unterstützt von Stegblechen 10a-10g. Hinter der formenden Kontur befindliche Hohlräume sind bis auf einen Spalt zur Dampfleitung 3a-3h von angepassten Füllkörpern 5a-5b ausgefüllt. Diese sind durch Tieflochbohrungen 7a-7k beheizbar und/oder kühlbar.

Das Werkzeug wird in einem druckfesten Kasten 8, 9 und 12 montiert, so dass das innenliegende Werkzeug, bestehend aus einem Oberwerkzeug und einem Unterwerkzeug, beim Öffnen des Kastens oder danach geöffnet und das Bauteil 4 hineingelegt und wieder herausgenommen werden kann.

Der Kasten steht beispielsweise auf beheizbaren Platten (nicht dargestellt) oder wird von einem in Tieflochbohrungen des Kastens strömenden Wärmeträger beheizt.

Im geschlossenen Kasten wird das Bauteil 4 in seine Endform gebracht. Der eingeleitete Dampf strömt in die Hohlräume hinter die formenden Bleche 1,2 in das luftdurchlässige Bauteil 4 und erwärmt das von ihm umspülte Material. Dampf kondensiert an der Materialoberfläche und die Kondensationswärme steigert die Materialtemperatur bis zur Dampftemperatur.

Die Bleche 1,2 besitzen eine geringe Wärmekapazität. Nur wenig Kondensat bildet sich an der formenden Oberfläche und dringt in die randnahen Schichten des Bauteils 4 ein.

Beim Evakuieren verdampft das am Bauteil 4 am Material haftende oder von ihm aufgenommene Kondensat unter Wärmeaufnahme. Die Energie wird mit dem Dampf abgeführt. In den randnahen Schichten befindet sich das aus der Werkzeugerwärmung resultierte Kondensat. Die für die Verdampfung erforderliche Wärme wird aus den zuvor erwärmten Blechen 1,2 abgeleitet. Die Bleche 1,2 kühlen dadurch stärker ab als der Werkzeuggrundkörper, bestehend aus den Steg- 10a-10g und Wandblechen 1,2 und den Füllkörpern 5a-5b zu dem hin ein wärmeisolierender Spalt (2 bis 20 mm) besteht.

Im Ergebnis erhält man ein abgekühltes, trockenes Bauteil 4, das sich leicht vom Werkzeug (Blech 1,2) löst.

Die Variante B zur erfindungsgemäßen Formgebung besteht aus einem zweiteiligen, aus Blöcken 5a-5f gefertigten Werkzeug 5, Fig. 2. Auch das Werkzeug 5 besitzt außen liegend eine Dichtung 6. Es ist direkt beheizbar über Tieflochbohrungen (nicht dargestellt) oder Rohrschlangen im Grundkörper 5a-5f, die von einem Wärmeträger durchströmt werden oder wird indirekt durch beheizte Aufspannplatten erwärmt.

In die Blöcke des Grundkörpers 5a-5f ist die Kontur geformt, aber um 2 bis 20 mm tiefer als für die Teilegeometrie erforderlich. Darauf mit Abstandshaltern 10a-10h aufgebaut ist die aus Blechen 1,2 geformte konturgebende Oberfläche. Wenigstens eines der beiden Bleche 1,2 ist gelocht. Durch eine oder mehrere Bohrungen im Grundkörper 5a-5f wird der Dampf in den Hohlraum 3a-3f zwischen den gelochten Blechen 1,2 und dem Werkzeuggrundkörper 5a-5f zu- bzw. abgeleitet. Die Eigenschaften dieser Variante entsprechen denen der Variante A.

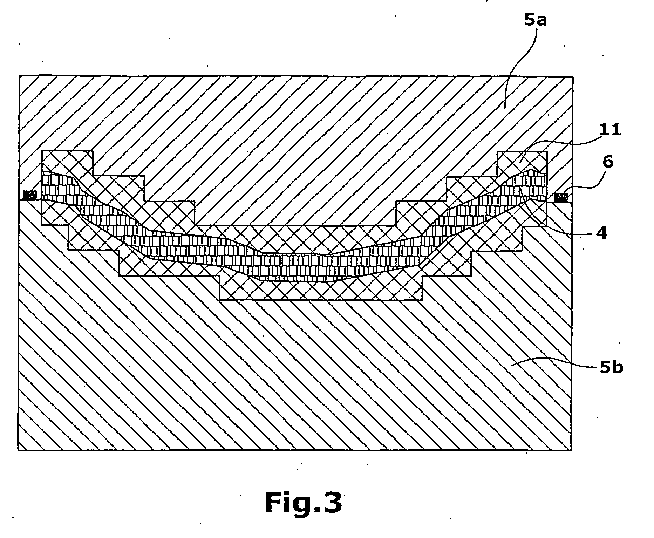

Variante C besitzt einen Werkzeuggrundkörper 5a, 5b ähnlich wie Variante B, Fig. 3. Auf die zurückgesetzte Kontur des Grundkörpers 5a, 5b aufgebaut ist ein Material geringer Wärmeleitfähigkeit 11 auf dem vorzugsweise auch die thermoplastischen Bindemittel des Bauteils 4 wenig haften. Die erfindungsgemäße Einschränkung der Kondensation am Werkzeug wird in dieser Variante durch die Behinderung des Wärmetransportes aus der formgebenden Oberfläche in den fest verbundenen Grundkörper 5a, 5b hinein erreicht. Durch die geringe Adhäsion der aufschmelzenden Komponente und der formgebenden Oberfläche kann eine höhere Oberflächentemperatur akzeptiert werden wodurch im Arbeitszyklus weniger Kondensat durch Kondensation am Werkzeug 5a, 5b auftritt.

## Patentansprüche

1. Verfahren zum Herstellen und/oder Fixieren von luft- und dampfdurchlässigen Bauteilen (4) enthaltend ein Gemisch aus thermoplastischem Bindemittel und natürlichen Fasern und/oder künstlichen Fasern mit oder ohne zusätzlichem Schaumstoff, letzteres in Form von Flocken und/oder Granulat, **dadurch gekennzeichnet, dass** man das Bauteil (4) in einer druckfesten Kammer zwischen formgebenden Oberflächen mit geringer oder keiner Wärmeübertragung an das oder aus dem Werkzeug nach Entlüften der Kammer durch Anlegen eines Vakuums im Bereich von 0,5 bis 0,01 bar absolut mit einem dampfförmigen Wärmeträger in einem Druckbereich von 2 bis 10 bar absolut beaufschlagt und in einem weiteren Verfahrensschritt mit Vakuum im Bereich von 0,5 bis 0,1 bar absolut zur Verdampfung des kondensierten Wärmeträgers beaufschlagt.

2. Verfahren nach Anspruch 1, **dadurch gekennzeichnet, dass** die auf die Bauteilmasse bezogene Wärmeübertragung zwischen dem dampfförmigen Wärmeträger und der formgebenden Oberfläche und/oder dem Werkzeuggrundkörper während des Zyklusses kleiner als 250 m²/s² je m² Bauteiloberfläche und K Bauteilerwärmung während des Prozesses ist.

3. Verfahren nach Anspruch 1, **dadurch gekennzeichnet, dass** man ein Bauteil (4) aus wenigstens einer, insbesondere zwei oder mehr Schichten gleicher oder unterschiedlicher Materialzusammensetzung einsetzt.

4. Verfahren nach Anspruch 1 oder 3, **dadurch gekennzeichnet, dass** man als Werkzeug zur Formgebung eine konturgebende dünne Schale eines gelochten und/oder ungelochtem Blechs und einen dampfdichten raumfüllenden Werkzeuggrundkörper mit einem dazwischenliegendem Dampfleitraum einsetzt.

5. Verfahren nach einem der Ansprüche 1 bis 4, **dadurch gekennzeichnet, dass** man als formgebende Kontur wenigstens ein gelochtes oder ungelochtes Blech einsetzt, das sich in einem Abstand von 2 bis 20 mm zum Werkzeuggrundkörper, befindet.

6. Verfahren nach einem der Ansprüche 1 bis 4, **dadurch gekennzeichnet, dass** man als formgebende Kontur eine auf den Werkzeuggrundkörper aufgesetzte Schicht aus einem Material geringerer Wärmeleitfähigkeit, insbesondere aus PTFE, EPDM, Epoxidharz oder Phenolharz in einer Schichtstärke von 1 bis 30 mm einsetzt.

7. Verfahren nach einem der Ansprüche 1 bis 4, **dadurch gekennzeichnet, dass** man einen druckfesten Werkzeuggrundkörper aus bearbeitetem Vollmaterial, insbesondere aus Aluminium oder Stahl einsetzt.

8. Verfahren nach einem der Ansprüche 1 bis 4, **dadurch gekennzeichnet, dass** man einen druckfesten Werkzeuggrundkörper aus bearbeitetem Gussmaterial, insbesondere aus Grauguss oder Aluminiumguss einsetzt.

9. Verfahren nach einem der Ansprüche 1 bis 8, **dadurch gekennzeichnet, dass** man als Wärmeträger Thermoöl oder Heizwasser in durchströmten Bohrungen (7) oder Rohrschlangen zur Temperierung auf eine Temperatur von 120 bis 180 °C besitzt.

## Claims

1. A process for preparing and/or setting air- and steam-permeable structural members (4) containing a mixture of thermoplastic binder and natural fibers and/or artificial fibers with or without additional foam in the form of flakes and/or granules, **characterized in that** said structural member (4) in a pressure-resistant chamber between shaping surfaces with a low or no heat transfer to or from the mold, after deaerating the chamber by applying a vacuum within a range of from 0.5 to 0.01 bar absolute, is pressurized by a vaporous heat-transfer medium within a pressure range of from 2 to 10 bar absolute, and in a further process step, a vacuum is applied within a range of from 0.5 to 0.1 bar absolute to evaporate the condensed heat-transfer medium.

2. The process according to claim 1, **characterized in that** the heat transfer per unit mass of the structural member between the vaporous heat-transfer medium and the shaping surface and/or the base during the cycle is lower than 250 m²/s² per 1 m² of surface of the structural member and per 1 K of heating of the structural member during the process.

3. The process according to claim 1, **characterized in that** a structural members (4) is employed which consists of at least one layer, especially two or more layers, of the same or different material compositions.

4. The process according to claim 1 or 3, **characterized in that** a contour-defining thin shell of a perforated and/or non-perforated metal sheet and a steam-impermeable solid mold base with a steam-channeling space between is employed as a mold for shaping.

5. The process according to any of claims 1 to 4, **characterized in that** at least one perforated or non-perforated metal sheet which is at a distance of from 2 to 20 mm from the mold base is employed as the shaping contour.

6. The process according to any of claims 1 to 4, **characterized in that** a layer of a material having a low thermal conductivity, especially PTFE, EPDM, epoxy resin or phenolic resin, applied to the mold base in a layer thickness of from 1 to 30 mm is employed as the shaping contour.

7. The process according to any of claims 1 to 4, **characterized in that** a pressure-resistant mold base made of a processed solid material, especially aluminum or steel, is employed.

8. The process according to any of claims 1 to 4, **characterized in that** a pressure-resistant mold base made of a processed cast material, especially of grey cast iron or cast aluminum, is employed.

9. The process according to any of claims 1 to 8, **characterized in that** a heat-transfer oil or heating water is employed as the heat-transfer medium flowing through bores (7) or pipe coils for bringing the temperature to from 120 to 180 °C.

## Revendications

1. Procédé pour préparer et/ou fixer des éléments de construction (4) perméable à l'air et à la vapeur contenant un mélange de liant thermoplastique et de fibres naturelles et/ou de fibres artificielles avec ou sans mousse additionnelle, la dernière sous la forme de flocons et/ou granules, **caractérisé en ce que** ledit élément de construction (4) est traité avec un milieu caloporteur vaporeux dans une gamme de pression de 0,5 à 0,01 bar absolu dans une chambre résistante à la pression, après désaérage de la chambre par application d'un vide comprise dans la gamme de 0,5 à 0,01 bar absolu, entre des surfaces formatrices présentant un transfert thermique bas ou aucun transfert thermique au moule ou du moule, et dans une autre étape dudit procédé, est soumis à un vide comprise dans la gamme de 0,5 à 0,1 bar absolu pour évaporer le milieu caloporteur condensé.

2. Procédé selon la revendication 1, **caractérisé en ce que** le transfert thermique entre ledit milieu caloporteur vaporeux et ladite surface formatrice et/ou le corps de base de ladite moule, basé sur la masse de l'élément de construction, pendant le cycle est moins de 250 m²/s² par m² de surface de l'élément de construction et par K d'échauffement de l'élément de construction pendant le procédé.

3. Procédé selon la revendication 1, **caractérisé en ce qu'**un élément de construction (4) consistant en au moins une, notamment deux ou plus couches ayant une composition de matériau identique ou différente est utilisé.

4. Procédé selon l'une des revendications 1 ou 3, **caractérisé en ce qu'**une coquille mince définissant les contours et consistant en une tôle perforée et/ou non-perforée et un corps de base de la moule remplissant l'espace imperméable à la vapeur avec une espace conductrice de vapeur entre eux sont utilisés en tant de moule pour le formage.

5. Procédé selon l'une des revendications 1 à 4, **caractérisé en ce qu'**au moins une tôle perforée et/ou non-perforée étant dans une distance de 2 à 20 mm dudit corps de base de la moule est utilisée en tant de contour formatrice.

6. Procédé selon l'une des revendications 1 à 4, **caractérisé en ce qu'**une couche d'un matériau à basse conductivité thermique, notamment de PTFE, EPDM, époxy-résine ou résine de phénol, dans une épaisseur de couche de 1 à 30 mm placée sur le corps de base de la moule est utilisée en tant de contour formatrice.

7. Procédé selon l'une des revendications 1 à 4, **caractérisé en ce qu'**un corps de base de la moule résistant à la pression et consistant en un matériau plein usiné, notamment en aluminium ou acier, est utilisé.

8. Procédé selon l'une des revendications 1 à 4, **caractérisé en ce qu'**un corps de base de la moule résistant à la pression et consistant en un matériau coulé usiné, notamment en fonte grise ou en aluminium fondu, est utilisé.

9. Procédé selon l'une des revendications 1 à 8, **caractérisé en ce qu'**un huile caloporteur ou de l'eau de chauffage est utilisé en tant de milieu caloporteur dans des forures (7) passées à travers ou dans des tuyaux serpentins pour mettre la température dans un équilibre de 120 à 180°C.
